# EUROPÄISCHE PATENTSCHRIFT

(11) **EP 3 581 351 B1**
(45) Veröffentlichungstag und Bekanntmachung des Hinweises auf die Patenterteilung: **20.10.2021**
(21) Anmeldenummer: 19167841.6
(22) Anmeldetag: 08.04.2019
(51) Int. Cl.: B26D 3/16, B26D 3/28, F16L 55/18

(54) **SCHÄLGERÄT**
PEELING DEVICE
DISPOSITIF D'ÉCROÛTAGE

(30) Priorität: 15.06.2018 DE 202018103392 U
(43) Veröffentlichungstag der Anmeldung: 18.12.2019
(73) Patentinhaber: PF-Schweißtechnologie GmbH, 36304 Alsfeld (DE)
(72) Erfinder: SPYCHALSKI-MERLE, Achim, 36304 Alsfeld (DE)
(74) Vertreter: Eisenführ Speiser

(56) Entgegenhaltungen:
- EP-A1- 2 384 868
- EP-A2- 1 306 149
- DE-A1- 3 529 527
- DE-A1- 10 027 316

## Beschreibung

Die vorliegende Erfindung betrifft ein Schälgerät zum zumindest teilweisen Abtragen einer Außenumfangsoberfläche eines zumindest annähernd zylindrischen Körpers gemäß dem Anspruch 1.

Insbesondere betrifft die vorliegende Erfindung ein, insbesondere monodimensionales, Schälgerät zum zumindest teilweisen Abtragen einer Außenumfangsoberfläche eines zumindest annähernd zylindrischen Körpers, insbesondere eines zylindrischen Kunststoffrohrs, mit einem C-förmigen oder einem C-ähnlich geformten Grundkörper, der zur Ausbildung einer peripheren Öffnung am Grundkörper zwei freie Enden umfasst, zwischen die der zylindrische Körper einführbar und konzentrisch zu einem Mittelpunkt eines durch eine Innenfläche des Grundkörpers vorgegebenen Inkreises positionierbar ist.

In der Praxis ist es bekannt, rotationssymmetrische Körper oder Gegenstände, wie beispielsweise zylindrische Kunststoffrohre, die an ihren Enden miteinander oder mit anderen Formteilen, wie T- oder Kreuzstücken, beispielsweise über Heizwendelfittinge im Wege einer Heizwendelverschweißung verbunden werden sollen, einer speziellen Behandlung zu unterziehen, um eine sichere und/oder mediendichte Verbindung zu erzielen. In solchen Kunststoffrohren können beispielsweise Medien, wie Wasser oder Gase transportiert werden. Um eine entsprechendes Transportnetz herzustellen, werden mehrere Kunststoffrohre miteinander, zum Beispiel mittels Muffen oder mit Formstücken, durch Verschweißen oder Verkleben verbunden.

Weiterhin ist aus der Praxis bekannt, Abzweige für beispielsweise Zu-oder Abläufe in bereits bestehende Rohrleitungen durch Aufsetzen von sogenannten Sattelstücken auf ein Rohr zu schaffen. Auch in diesen Fällen muss die Rohroberfläche, auf der das Sattelstück beispielsweise aufgeschweißt oder geklebt werden soll, vorbehandelt werden. Neben der Reinigung der Oberfläche ist es besonders wichtig, die auf der Oberfläche befindliche Oxidschicht zu entfernen und eine ebene Fläche zu schaffen, die frei von Kratzern und Riefen ist, da solche die Schweiß- oder Klebequalität und damit die Haltbarkeit und Dichtigkeit der Verbindungsnaht negativ beeinflussen.

Da Sattelstücke üblicherweise nicht am Rohranfang aufgesetzt werden, sondern von diesem entfernt auf der Oberfläche, sind Schälgeräte, wie beispielsweise das der DE Patentanmeldung 100 27 316 oder der EP-Patentanmeldung 2 384 868 bekannt. Bei diesen Schälgeräten sind Rollen zu einer Laufschale zusammengefasst, in die das zu schälende Rohr eingelegt wird. Der Laufschale gegenüber ist ein Schälmesser angeordnet, das entlang einer Spindel manuell auf das in der Laufschale liegende Rohr zubewegt werden kann. Liegt das Schälmesser an dem Rohr an, wird das Schälgerät um die Längsachse des Rohrs gedreht.

Auch die EP-Patentanmeldung 1 160 035 zeigt ein kompaktes Schälgerät zum Schälen eines Rohres oder eines Kabels. Dieses weist einen Ring auf, der eine im Wesentlichen C-förmige Gestaltung besitzt und damit eine periphere Öffnung ausbildet, durch welche das Kabel oder das Rohr seitlich in den Ring einführbar ist. Der C-förmige Ring umschließt dabei das Kabel oder das Rohr um mehr als 180 Grad, was eine spielfreie Rundführung des Schälwerkzeugs um das Kabel oder das Rohr erlaubt. Zur Einführung des Kabels oder des Rohres wird der Ring elastisch verformt und vorübergehend so aufgeweitet, dass das Kabel oder das Rohr quer zu seiner Achse durch die Öffnung ins Zentrum des Ringes geführt werden kann. Zur Lagefixierung des Kabels oder des Rohres sieht das Schälwerkzeug eine Lagerplatte vor, die einen mechanischen Druck auf das Kabel oder des Rohr ausübt. Hierzu ist aber ein zusätzlicher Verstellmechanismus notwendig, was die Komplexität des Aufbaus des Schälwerkzeugs erhöht. Außerdem ist ein Vorschub dieses Schältgeräts entlang der Längsachse des zu bearbeitenden Rohres oder Kabels aufgrund eines in dieser Richtung starr ausgebildeten Aufbaus erschwert.

Es ist daher die Aufgabe der vorliegenden Erfindung, ein Schälgerät bereitzustellen, das die vorstehend genannten Nachteile überwindet, eine betriebssichere, einfache Kopplung zwischen dem Schälgerät und dem zylindrischen Körper ermöglicht und einen vereinfachten Vorschub bietet.

Diese Aufgabe wird mit einem Schälgerät mit dem Merkmalsbestand des Anspruchs 1 gelöst. Vorteilhafte Ausgestaltungen mit zweckmäßigen Weiterbildungen sind in den davon abhängigen Ansprüchen angegeben.

In einer weiteren vorteilhaften Ausgestaltung wird die vorstehend genannte Aufgabe bei einem Schälgerät der eingangs genannten Art dadurch gelöst, dass die Zentralachse und/oder eine oder beide der Außenachsen um einen vorgegebenen Winkel tangential bezüglich des Inkreises verschwenkbar gelagert sind. Hierdurch ist der Vorschub des Schälgeräts entlang der Längsachse des zylindrischen Körpers erleichtert. Aufgrund der Verschwenkbarkeit der Achsen erhält der Benutzer dennoch einen Vorschub beim Schälgerät auch wenn er keine ganze Umdrehung um den zylindrischen Körper vollführt.

Vorzugsweise ist die Zentralachse in einer Durchgangsöffnung des Grundkörpers um einen vorgegebenen Winkel tangential - aber versetzt - bezüglich des Inkreises verschwenkbar gelagert ist. Alternativ oder ergänzend können auch eine oder beide der Außenachsen in Durchgangsöffnungen des Grundkörpers um einen vorgegebenen Winkel tangential - aber versetzt - bezüglich des Inkreises verschwenkbar gelagert sein. Vorzugsweise beträgt der vorgegebene Winkel zwischen 0,5 und 3 Grad, vorzugsweise ungefähr 1 Grad.

Der Inkreis ist als ein fiktiver Bestandteil des Schälgeräts zu verstehen, der im Wesentlichen durch die Formgebung der Innenfläche des Grundkörpers des Schälgeräts vorgegeben ist und zwar in einer Konstellation, in welcher der Grundkörper keiner elastischen Verformung unterliegt. Eine solche elastische Verformung kann beispielsweise dann eintreten, wenn ein zylindrischer Körper ins Zentrum des C-förmigen oder C-ähnlich geformten Grundkörper eingebracht wird oder darin eingebracht ist. Der Inkreis kann auch lediglich annähernd kreisförmig gebildet sein. Es genügt also, wenn der Inkreis über seinen Umfang hinweg einen annähernd konstanten Radius besitzt.

Die mindestens eine Aussparung am Grundkörperführt zu einer Verringerung oder zu einer definierten Einstellung der (Biege-)Steifigkeit des Grundkörpers. Damit lässt sich der zylindrische Körper auf einfachere Weise durch die Öffnung, mithin zwischen den beiden freien Enden, durchführen, wobei der Grundkörper elastisch verformt wird. Der Grundkörper nimmt seine im Wesentlichen unverformte Konfiguration wieder ein, sobald der zylindrische Körper konzentrisch zum Mittelpunkt des Inkreises positioniert ist. Dabei ist es auch möglich, dass der Grundkörper aufgrund seiner Elastizität die Vorspannung des eingeführten zylindrischen Körpers ebenfalls vorgibt oder einstellt.

Die freien Enden sind am Grundkörper vorzugsweise derart ausgebildet, dass der Grundkörper den zylindrischen Körper oder den Inkreis über einen Winkel von mehr als 180 Grad umschließt. Dies gewährleistet, dass das Schälgerät sicher am zylindrischen Körper positioniert werden kann und sich nicht ungewollt vom zylindrischen Körper beziehungsweise vom Kunststoffrohr löst.

Um das Einführen eines zylindrischen Körpers oder das Durchführen des zylindrischen Körpers durch die periphere Öffnung zu erleichtern, hat es sich als sinnvoll erwiesen, wenn die Außenauflager aus wenigstens einer Außenrolle gebildet sind, die auf der Außenachse drehbar gelagert ist.

Vorzugsweise sind die Außenauflager aber aus einem zwei der Außenrollen umfassenden Außenrollenpaar gebildet.

Beim Einsatz von einem oder von mehreren Außenrollenpaaren lässt sich das Schälgerät dadurch kompakt halten, dass eine erste Außenrolle seitlich neben einer ersten Seitenfläche des Grundkörpers drehbar gelegt gelagert ist, und dass eine zweite Außenrolle seitlich neben einer zu der ersten Seitenfläche parallel angeordneten zweiten Seitenfläche des Grundkörpers drehbar gelagert ist.

In einer bevorzugten Ausführungsform eines Schälgeräts ragen die Außenrollen über die freien Enden des Grundkörpers hinaus. Dadurch ist gewährleistet, dass ein einzuführendes Kunststoffrohr beziehungsweise ein einzuführender zylindrischer Gegenstand oder zylindrischer Körper zuerst mit dem Außenauflager in Kontakt kommt, welches aus dem elastisch nachgiebigen Material geformt ist. Die Außenhaut oder die Außenoberfläche des zylindrischen Körpers wird dadurch geschont. Beim Aufsetzen des Schälgerätes lassen sich aufgrund der Elastizität der Außenauflager Beschädigungen am Kunststoffrohr vermeiden, die unter Umständen sogar zu einer lokalen Schwächung des Kunststoffrohrs führen könnten.

Eine gleichmäßige Drei-Punkt-Lagerung des zylindrischen Körpers lässt sich dadurch erzielen, dass das Zentralauflager äquidistant von den freien Enden beabstandet am Grundkörper ausgebildet oder daran angeordnet ist.

Vorzugsweise ist das Zentralauflager als ein Zentralrollenpaar mit Zentralrollen gebildet, die auf der in einer Durchgangsöffnung des Grundkörpers gelagerten Zentralachse drehbar gelagert sind. Durch die Ausbildung des Zentralauflager als Zentralrollenpaar wird die Reibung zwischen dem Zentralauflager und dem zylindrischen Körper verringert, so dass eine geringere Kraft aufzubringen ist, um die Außenumfangsoberfläche des zylindrischen Körpers mittels der Klinge zu bearbeiten. Alternativ kann das Zentralauflager auch eine einzige auf einer Zentralachse drehbar gelagerte Zentralrolle umfassen.

Beim Einsatz eines Zentralrollenpaares kann das Schälgerät dadurch kompakt gehalten werden, dass eine erste Zentralrolle seitlich neben einer ersten Seitenfläche des Grundkörpers drehbar gelagert ist, und dass eine zweite Zentralrolle seitlich neben einer parallel zu der ersten Seitenfläche angeordneten zweiten Seitenfläche drehbar gelagert ist.

Um die Reibung zwischen den Zentralrollen und dem zylindrischen Körper zu verringern, hat es sich als bevorzugt herausgestellt, wenn die Zentralrollen auf ihrer dem Grundkörper abgewandten Seite sich im Durchmesser verjüngend oder konisch gebildet sind.

Bei einer weiteren bevorzugten Ausführungsform sind die Zentralachse und/oder eine oder beide der Außenachsen zwischen einer, einem Vorschub des Schälgeräts entsprechenden, verschwenkten Stellung und einer, einem Rücklauf des Schälgeräts entsprechenden, unverschwenkten Stellung verstellbar. Unter der verschwenkten Stellung der Zentralachse und/oder der Außenachsen ist eine Ausrichtung der Achsen zu verstehen, bei der ihre Längsachse tangential - versetzt - bezüglich dem Inkreis aber windschief bezüglich der Längsachse des zylindrischen Körpers orientiert ist. Demgegenüber ist unter der unverschwenkten Stellung eine Konfiguration der Längsachse der Achsen zu verstehen, bei der diese parallel zur Längsachse des zylindrischen Körpers ausgerichtet sind. Mit anderen Worten werden also bei der Vorwärtsbewegung die eine oder die mehreren Achsen um den Winkel verdreht und bei der Rückbewegung wieder gerade gestellt. Ein Benutzer braucht damit keine volle Umdrehung zu schälen und erhält trotzdem einen Vorschub entlang der Längsachse des zylindrischen Körpers.

Eine einfache Verstellung der Zentralachse lässt sich auch dadurch erzielen, dass an einer Außenfläche und/oder an einer Seitenfläche des Grundkörpers ein relativ bezüglich des Grundkörpers begrenzt verschiebbar geführter Ring angeordnet ist, der einen Abschnitt mit Anschlägen aufweist. Dabei ist die Zentralachse mittels dieser Anschläge zwischen der verschwenkten Stellung und der unverschwenkten Stellung verstellbar.

Der Ring kann beispielsweise im Querschnitt L-förmig oder auch U-förmig gebildet sein, was die Stabilität und die Führungsgenauigkeit des Ringes erhöht. Er kann sich nur teilweise aber auch vollständig über die gesamte Außenfläche des Grundkörpers erstrecken. Beim Erstrecken des Ringes vollständig über die Außenfläche des Grundkörpers ist der Benutzer vor einem Einklemmen der Hände oder der Finger bei der Relativbewegung des Ringes bezüglich dem Grundkörper geschützt.

Vorzugsweise ist der Ring mit in die Außenfläche des Grundkörpers eingedrehten Schrauben gesichert, wozu der Ring Langlöcher aufweist, so dass der im Grundkörper festgelegte Schraubenkopf entlang diesen Langlöchern gleiten kann und eine - begrenzte - Relativbewegung zwischen dem Ring und dem Grundkörper ermöglicht.

Zusätzlich kann an einem oder an beiden freien Enden des Ringes ein Lagerabschnitt mit einer Ausnehmung vorgesehen oder ausgebildet sein, durch die die betreffende Außenachse hindurchtritt. Auch hier sind die Abmessungen der Ausnehmung derart gewählt, dass eine Relativbewegung zwischen dem Ring und dem Grundkörper gewährleistet und ermöglicht ist; mithin also aufgrund des vorhandenen Spiels zwischen der Außenachse und der Ausnehmung keine Blockade der Relativbewegung von Grundkörper und Ring eintreten kann. Die Lagerabschnitte können aber auch analog zu dem Abschnitt des Ringes gestaltet sein, durch den die Zentralachse tritt. In dieser Konfiguration umfassen die Lagerabschnitte ebenfalls einen ersten und einen zweiten Anschlag, um eine oder beide der Außenachsen zwischen einer verschwenkten Stellung und einer unverschwenkten Stellung zu verstellen.

Zur vereinfachten Handhabung des Schälgeräts können an dem Grundkörper oder an dem relativ bezüglich dem Grundkörper verschiebbaren Ring mindestens ein, vorzugsweise aber genau zwei Griffe angeordnet sein.

Die Handhabung und die Bedienung des Schälgeräts ist zudem erleichtert, wenn beim Umdrehen des Grundkörpers in einer dem Abtragen entsprechenden Drehrichtung die Zentralachse und/oder eine oder beide der Außenachsen in die verschwenkte Stellung überführt werden oder überführt sind, und wenn beim Umdrehen des Grundkörpers in einer dem Abtragen entgegengesetzten Drehrichtung die Zentralachse und/oder eine oder beide der Außenachsen in die unverschwenkte Stellung überführt werden oder überführt sind.

Für eine betriebssichere Lagerung oder Verschwenkung der Zentralachse umfasst der Grundkörper Durchgangsöffnungen, in durch die die Zentralachse und/oder eine oder beide der Außenachsen geführt sind. Diese Durchgangsöffnungen umfassen einen ersten Öffnungsabschnitt, der parallel zu einer Längsachse des zylindrischen Körpers verläuft und der in einen zweiten Öffnungsabschnitt übergeht, der tangential - versetzt - bezüglich dem Inkreis aber windschief bezüglich der Längsachse des zylindrischen Körpers verläuft. Durch die entsprechende Gestaltung der Öffnungsabschnitte lässt sich eine begrenzte Bewegung, mithin die begrenzte Verschwenkung der Achsen realisieren.

Eine vorteilhafte Weiterbildung des Schälgeräts sieht vor, dass die Außenauflager zumindest teilweise aus einem elastisch nachgiebigen Material gebildet sind. Damit können die Außenauflager beim Einführen des zylindrischen Körpers zurückweichen, womit dieser die Öffnung des Grundkörpers auf einfache Weise passieren kann.

Vorzugsweise sind dabei die Außenauflager derart aus dem elastischen Material gebildet, dass ein eingeführter zylindrischer Körper zudem unter einer Vorspannung gehalten ist. Hierdurch kann also auf einen aufwändigen Verstellmechanismus für das Außenauflager verzichtet werden, da das Außenauflager nunmehr selbst aus dem elastisch nachgiebigen Material besteht, das einen mechanischen Druck auf den zylindrischen Körper ausübt, wenn dieser konzentrisch zum Mittelpunkt des Inkreises positioniert ist.

Als elastisch nachgiebiges Material kommt beispielsweise ein Elastomer, beispielsweise ein vulkanisierter, gegebenenfalls synthetisch hergestellter, Kautschuk (Gummi) in Betracht. Alternativ können auch Polyurethan- oder Polypropylen-Elastomere Einsatz finden. Vorzugsweise weist das elastisch nachgiebige Material eine Shore-A-Härte von zwischen 30 und 80 SHA, weiterhin vorzugsweise zwischen 50 und 70 SHA auf. Härtere Elastomere, die aber dennoch eine ausreichende Vorspannung auf den zylindrischen Körper ausüben können, besitzen eine Shore-A-Härte von zwischen 80 und 90 SHA.

Um zylindrische Körper unterschiedlichen Durchmessers bearbeiten zu können, hat es sich als außerdem als vorteilhaft erwiesen, wenn eine in der Klingenhalterung eingespannte Klinge radial bezüglich des Inkreises verstellbar ist.

In diesem Zusammenhang hat es sich aber besonders bevorzugt erwiesen, wenn eine in der Klingenhalterung eingespannte Klinge radial bezüglich des Inkreises mittels einer Feder beaufschlagt ist. Durch die Feder wird die Klinge an die Außenoberfläche des zylindrischen Körpers gepresst, so dass aufgrund der Federvorspannung beim Verdrehen des Schälgeräts ein Abtragen der Außenoberfläche automatisch erfolgt, und zwar ohne, dass ein Benutzer die Klinge zusätzlich radial gegen den zylindrischen Körpers drücken müsste.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine perspektivische Darstellung eines ersten Schälgeräts,
- Fig. 2: eine weitere perspektivische Darstellung des Schälgeräts aus Figur 1,
- Fig. 3: eine Seitenansicht des Schälgeräts aus Figur 1,
- Fig. 4: eine perspektivische Darstellung eines zweiten Schälgeräts,
- Fig. 5: eine weitere perspektivische Darstellung des Schälgeräts aus Figur 4,
- Fig. 6: eine Seitenansicht des Schälgeräts aus Figur 4,
- Fig. 7: eine weitere Seitenansicht des Schälgeräts aus Figur 4 mit illustrierten Kreisbewegungen der Außenrollenpaare und des Zentralrollenpaars,
- Fig. 8: eine weitere Seitenansicht des Schälgeräts aus Figur 4 in einer dem Vorlauf entsprechenden Konfiguration,
- Fig. 9: den Schnitt A-A aus Figur 8,
- Fig. 10: eine weitere Seitenansicht des Schälgeräts aus Figur 4 in einer dem Rücklauf entsprechenden Konfiguration, und
- Fig. 11: den Schnitt A-A aus Figur 10.

Die Figuren zeigen Schälgeräte 100, die einen Grundkörper 102 umfassen. Dieser Grundkörper 102 ist C-förmig gestaltet und umfasst zwei freie Enden 106, 108, die zwischen sich eine periphere Öffnung 104 ausbilden, durch die ein zumindest annähernd zylindrischer Körper, insbesondere ein zylindrisches Kunststoffrohr eingebracht werden kann, um anschließend seine Außenumfangsoberfläche zumindest teilweise mit dem Schälgerät 100 abzutragen.

Der Grundkörper 102 weist eine dem zylindrischen Körper zugewandte Innenfläche 110 auf. Außerdem umfasst der Grundkörper 102 eine, dem Betrachter der Figuren zugewandte, erste Seitenfläche 138 und eine zu der ersten Seitenfläche 138 parallel angeordnete zweite Seitenfläche 140. Der Grundkörper 102 weist auf seiner dem zu bearbeitenden zylindrischen Körper abgewandten Seite eine Außenfläche 152 auf, die in das, in den Figuren links dargestellte, erste Ende 106 einerseits und in das, in den Figuren rechts dargestellte, zweite Ende 108 andererseits übergeht. Auch die Innenfläche 110 geht in das erste Ende 106 und in das zweite Ende 108 über. Um das Schälgerät 100 sicher am zu bearbeiteten zylindrischen Körper anzubringen, sind die freien Enden 106, 108 am Grundkörper 102 derart ausgebildet, dass der Grundkörper 102 den zylindrischen Körper über einen Winkel von mehr als 180 Grad umschließt. Vorzugsweise umschließt der Grundkörper 102 den zylindrischen Körper über einen Winkel von zwischen 180 Grad und 210 Grad.

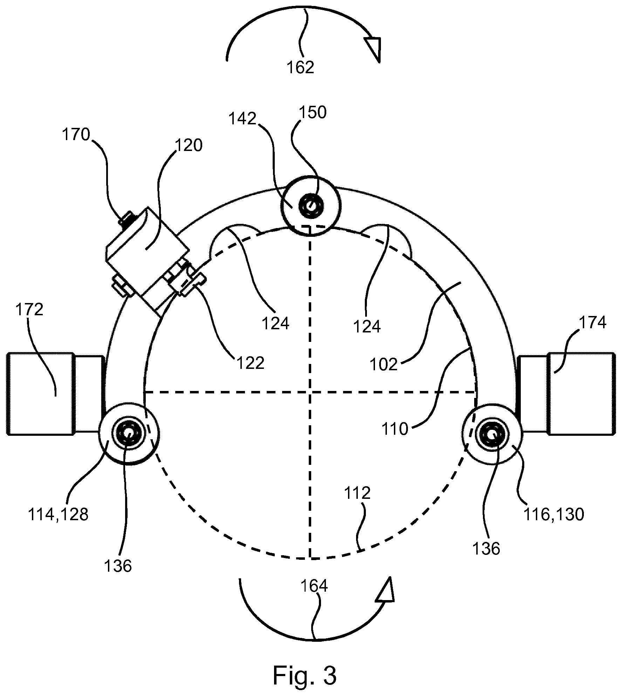

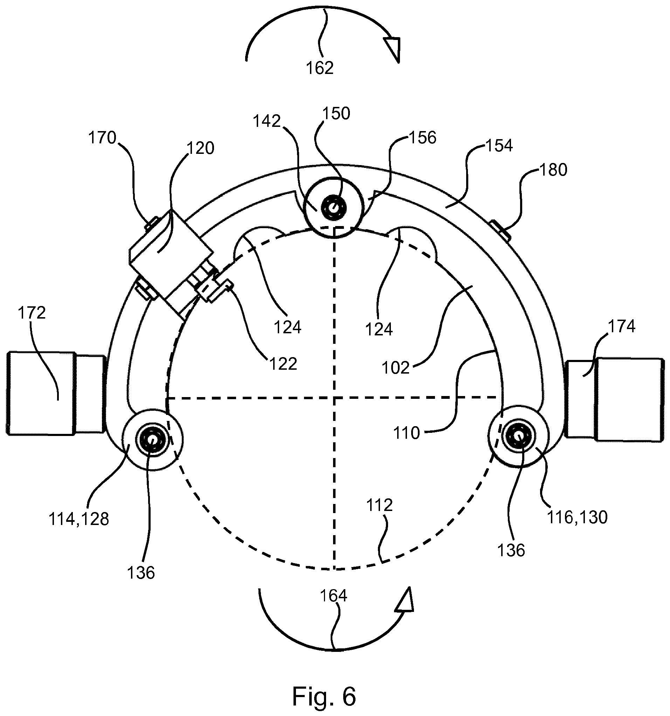

Durch den C-förmigen Grundkörper 102, vorliegend durch dessen Innenfläche 110, lässt sich ein fiktiver Inkreis 112 beschreiben (Fig. 3 und Fig. 6). Für das Abtragen von zumindest einem Teil einer Außenumfangsoberfläche des zylindrischen Körpers wird dieser konzentrisch zu einem Mittelpunkt dieses - gedachten - Inkreises 112 positioniert oder angeordnet.

Um die Biegesteifigkeit des Grundkörpers 102 herabzusetzen und damit das Schälgerät 100 einfacher auf einen zu bearbeitenden zylindrischen Körper aufzubringen, ist mindestens eine Aussparung 124 an der Innenfläche 110 ausgebildet, die sich radial bezüglich des Inkreises 112 erstreckt. Vorliegend sind genau zwei der Aussparungen 124 am Grundkörper 102 vorhanden, die symmetrisch bezüglich der freien Enden 106, 108 angeordnet sind. Die Aussparung 124 ist vorzugsweise im Querschnitt kreisbogenförmig gebildet. Dies bietet gegenüber der Ausführung einer Aussparung 124 als Schlitz den Vorteil, dass der Grundkörper 102 bei mehrfacher elastischer Verformung im Bereich der Aussparung 124 nicht einreißt aufgrund eines zu engen Radius.

Am ersten freien Ende 106 ist ein erstes Außenauflager 114 und am zweiten freien Ende 108 ist ein zweites Außenauflager 116 angeordnet, die an dem zylindrischen Körper anliegen, wenn er konzentrisch zum Mittelpunkt des Inkreises 112 positioniert ist. Hierzu überragen die Außenauflager 114, 116 den Inkreis 112 um einen vorgegebenen Betrag nach innen. Dieser Betrag kann beispielsweise zwischen 1,5 Millimeter und 3 Millimeter, vorzugsweise ungefähr 2 Millimeter betragen. Um das Einführen des zylindrischen Körpers ins Zentrum der Schälgeräte 100 zu erleichtern, sind die Außenauflager 114, 116 zumindest teilweise aus einem elastisch nachgiebigen Material gebildet.

Damit wird also das Einführen des zu bearbeitenden zylindrischen Körpers durch die Aussparungen 124 des Grundkörpers 102 einerseits und durch die aus einem elastisch nachgiebigen Material gebildeten Außenauflager 114, 116 andererseits begünstigt. Vorzugsweise lässt sich der zu bearbeitende zylindrische Körper zudem unter einer Vorspannung im Schälgerät 100 halten.

Zwischen dem ersten freien Ende 106 und dem zweiten freien Ende 108 ist am Grundkörper 102 ein Zentralauflager 118 angeordnet, das den zylindrischen Körper oder das Kunststoffrohr beim Schälvorgang ebenfalls kontaktiert, womit durch die beiden Außenauflager 114, 116 und dem Zentralauflager 118 eine betriebssichere Dreipunktlagerung für den zylindrischen Körper bereitgestellt ist. Vorliegend ist das Zentralauflager 118 zwischen den beiden Aussparungen 124 des Grundkörpers 102 angeordnet. Die gezeigten Schälgeräte 100 weisen ein Zentralauflager 118 auf, das am Grundkörper 102 äquidistant von den freien Enden 106, 108 beabstandet angeordnet ist.

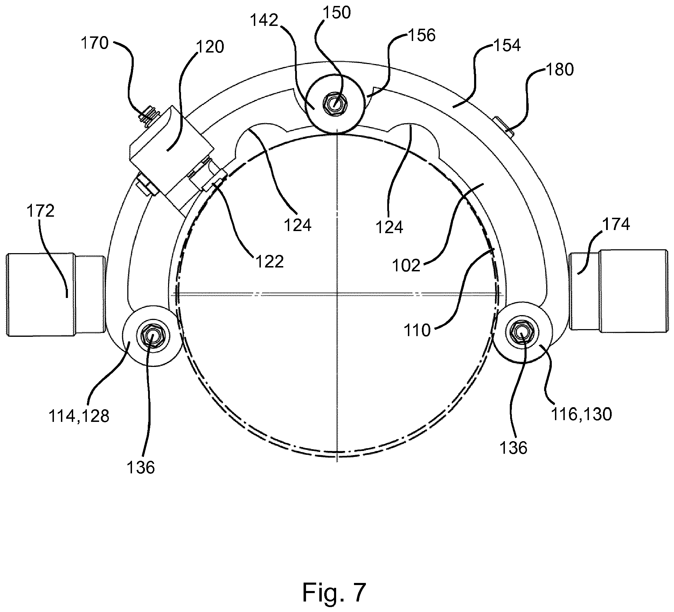

Auch das Zentralauflager 118 überragt den Inkreis 112 um einen vorgegebenen Betrag, der vorzugsweise geringer ist als der Betrag, den die Außenauflager 114, 116 den Inkreis 112 überragen. Das Zentralauflager 118 überragt den Inkreis 112 beispielsweise um zwischen 0,5 Millimeter und 1,5 Millimeter, vorzugsweise ungefähr um 1 Millimeter. Somit führen die Außenauflager 114, 116 also annähernd eine Kreisbewegung aus, deren Radius geringer ist als derjenige der Kreisbewegung des Zentralauflagers 118, wie dies exemplarisch in Figur 7 illustriert ist.

Am Grundkörper 102 ist zudem eine Klingenhalterung 120 angeordnet, die vorliegend seitlich an einer der beiden Seitenflächen 138, 140, vorliegend an der ersten Seitenfläche 138 angebracht ist. An dieser Klingenhalterung 120 ist eine Klinge 122 eingespannt, die ebenfalls den durch die Innenfläche 110 des Grundkörpers 102 vorgegebenen Inkreis 112 überragt. Diese Klinge 122 kann dadurch die Außenoberfläche eines zumindest annähernd zylindrischen Körpers, insbesondere eines zylindrischen Kunststoffrohrs zumindest zeitweise kontaktieren und damit abtragen oder schälen.

Vorliegend ist die Klinge 122 mittels einer Feder 170 beaufschlagt, die die Klinge 122 aufgrund der Federkraft im Wesentlichen radial bezüglich dem Inkreis 112 gegen die Außenumfangsoberfläche eines zylindrischen Körpers presst, insbesondere beim Verdrehen der Schälgeräte 100 in einer dem Abtragen der Außenumfangsoberfläche entsprechenden Drehrichtung 162 (vorliegend Uhrzeigersinn). Beim Verdrehen der Schälgeräte 100 in der entgegengesetzten Drehrichtung 164 wird die Klinge 122 mittels der Außenumfangsoberfläche gegen die Federkraft der Feder 170 zurückgedrückt, wobei kein Abtragen oder Schälen des zylindrischen Körpers erfolgt.

Um dem Benutzer das Verdrehen der Schälgeräte 100 zu erleichtern, sind vorliegend ein erster Griff 172 (linksseitig) und ein zweiter Griff 174 (rechtsseitig) vorgesehen. Vorliegend sind diese sich gegenüberliegend angeordnet und schließen damit - bezogen auf den Inkreis 112 - einen Winkel von ungefähr 180 Grad zwischen sich ein (Fig. 3 und Fig. 6). Der Einsatz von nur einem oder von mehr als zwei der Griffe 172, 174 ist möglich.

Bei den in den Figuren gezeigten Schälgeräten 100 ist das erste Außenauflager 114 aus einem ersten Außenrollenpaar 128 gebildet, welches auf einer Außenachse 136 drehbar gelagert ist. Zudem ist das zweite Außenauflager 116 aus einem zweiten Außenrollenpaar 130 gebildet, das ebenfalls auf einer Außenachse 136 drehbar gelagert ist. Jedes Außenrollenpaar 128, 130 weist eine, dem Betrachter der Zeichnung zugewandte, erste Außenrolle 132 und eine, vom Betrachter der Zeichnung abgewandte, zweite Außenrolle 134 auf. Die erste Außenrolle 132 ist seitlich neben der ersten Seitenfläche 138 des Grundkörpers 102 angeordnet. Die zweite Außenrolle 134 ist seitlich neben der zweiten Seitenfläche 140 des Grundkörpers 102 angeordnet. Die Außenachsen 136 sind in Durchgangsöffnungen 148 des Grundkörpers 102 gelagert oder festgelegt, welche sich von der ersten Seitenfläche 138, durch dem Grundkörper 102 hindurch zur zweiten Seitenfläche 140 erstrecken. Die Außenachsen 136 verfügen beidseitig über endständig ausgebildete Gewindestücke oder Gewindeabschnitte, auf die eine, vorzugsweise selbstsichernde, Mutter zur Festlegung der Außenrollen 132, 134 aufgeschraubt ist.

Vorliegend sind die Außenrollen 132, 134 mit (Weich-)Gummirädern gebildet, deren Reifen damit aus dem elastisch nachgiebigen Material geformt sind. Die Außenrollen 132, 134 sind bei den gezeigten Schälgeräten 100 walzenförmig oder walzenähnlich gestaltet und besitzen damit einen im Wesentlichen konstanten Radius entlang ihrer Erstreckung.

Zudem ist das Zentralauflager 118 vorliegend als ein Zentralrollenpaar 142 gebildet, welches auf einer Zentralachse 150 ebenfalls in einer Durchgangsöffnung 148 des Grundkörpers 102 gelagert oder festgelegt ist. Die Durchgangsöffnung 148 erstreckt sich vorliegend ebenfalls von der ersten Seitenfläche 138 des Grundkörpers 102 zur zweiten Seitenfläche 140. Auch die Zentralachse 150 verfügt beidseitig über endständig ausgebildete Gewindestücke oder Gewindeabschnitte, auf welche jeweils eine, vorzugsweise selbstsichernde, Mutter aufgeschraubt ist, um eine, in der Zeichnung vordere, erste Zentralrolle 144 und um eine, in der Zeichnung hintere, zweite Zentralrolle 146 an der Zentralachse 150 zu sichern. Die erste Zentralrolle 144 ist seitlich neben der ersten Seitenfläche 138 des Grundkörpers 102 angeordnet. Die zweite Zentralrolle 146 ist seitlich neben der zweiten Seitenfläche 140 des Grundkörpers 102 angeordnet.

Die Zentralrollen 144, 146, insbesondere die Reifen deren Räder sind vorzugsweise aus einem (festen) Kunststoff gebildet, der eine geringere Elastizität aufweist als das elastisch nachgiebige Material der Außenauflager 114, 116. Mit anderen Worten weisen diese eine höhere Shore-A-Härte, mithin eine Shore-A-Härte von mehr als 90 SHA auf. Beispielsweise kann das Material des Zentralauflagers 118 ausgewählt sein aus der Gruppe umfassend PE-LD, PE-HD, PP, PA66, POM, etc.. Die Zentralrollen 144, 146 sind auf ihrer dem Grundkörper 102 abgewandten Seite sich im Durchmesser verjüngend, mithin konisch, geformt.

Die Zentralachse 150 und/oder eine oder beide der Außenachsen 136 sind um einen vorgegebenen Winkel tangential bezüglich des Inkreises 112 verschwenkbar gelagert. Diese Verschwenkbarkeit begünstigt den Vorschub der Schälgeräte 100 in axialer Richtung des zylindrischen Körpers beim Abtragen dessen Außenumfangsoberfläche.

Beim Umdrehen des Grundkörpers 102 in einer dem Abtragen entsprechenden Drehrichtung 162 werden eine oder mehrere, vorzugsweise alle der Achsen 150, 136 in eine verschwenkte Stellung überführt, was einer dem Vorschub des Schälgeräts 100 entsprechenden Konfiguration entspricht. In dieser Konfiguration ist die Längsachse der betreffenden Achse 150, 136 windschief zur Längsachse des zylindrischen Körpers ausgerichtet.

Beim Umdrehen des Grundkörpers 102 in einer dem Abtragen entgegengesetzten Drehrichtung 164 werden eine oder mehrere, vorzugsweise alle der Achsen 150, 136 in die unverschwenkte Stellung überführt oder zurückgeführt, was einer dem Rücklauf des Schälgeräts 100 entsprechenden Konfiguration entspricht. In dieser Konfiguration ist die Längsachse der betreffenden Achse 150, 136 im Wesentlichen parallel zur Längsachse des zylindrischen Körpers ausgerichtet.

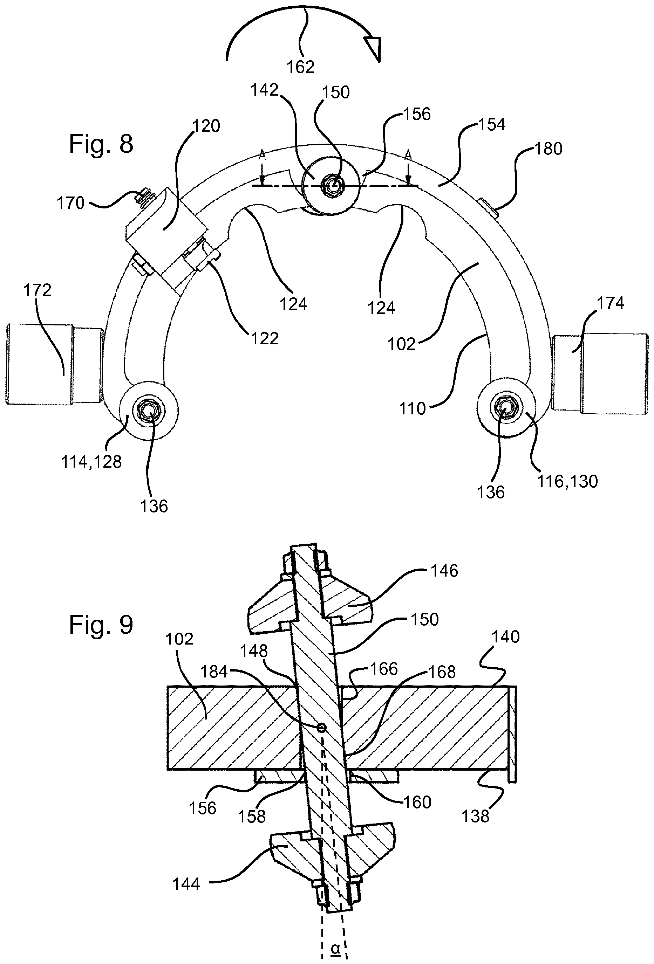

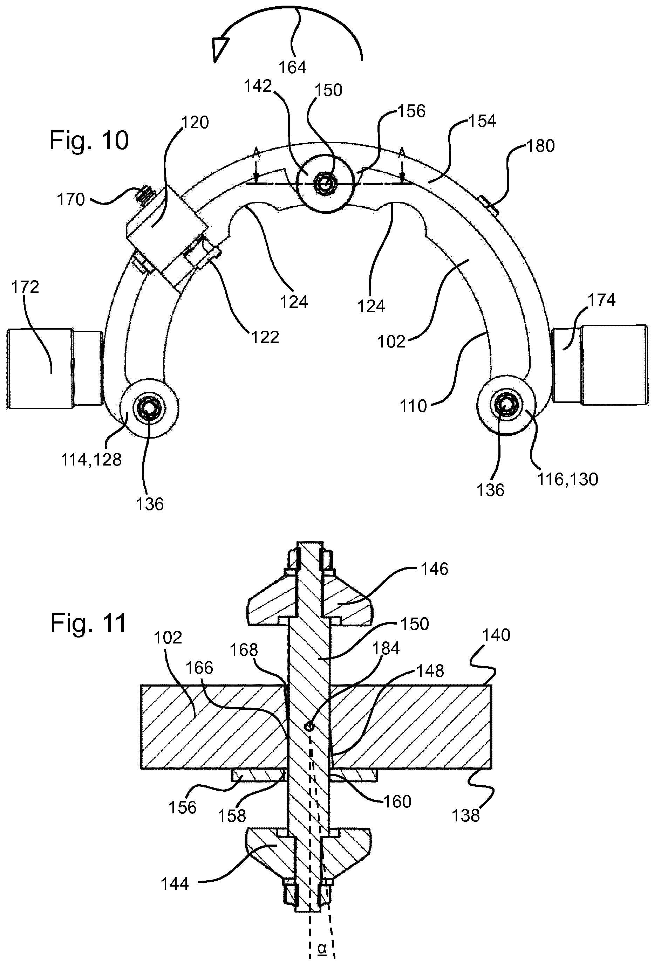

Die Verschwenkbarkeit von einer oder von mehreren der Achsen 150, 136 wird nachstehend - lediglich exemplarisch - in Verbindung mit der Zentralachse 150 anhand der Figuren 8 bis 11 beschrieben. Die Figuren 8 und 9 zeigen die Zentralachse 150 in der verschwenkten Stellung, wobei die Figuren 10 und 11 die Zentralachse 150 in der unverschwenkten Stellung zeigen. Obwohl in diesen Figuren nur die Verschwenkbarkeit der Zentralachse 150 zu erkennen ist, sei an dieser Stelle nochmals ausdrücklich darauf hingewiesen, dass alternativ oder ergänzend auch eine oder beide der Außenachsen 136 in analoger Weise innerhalb ihrer Durchgangsöffnung 148 des Grundkörpers 102 verschwenkbar gelagert sein können.

Die Durchgangsöffnung 148, in der die Zentralachse 150 an einem Schwenklager 184, insbesondere einem Stift gelagert ist, umfasst einen ersten Öffnungsabschnitt 166, der in einen zweiten Öffnungsabschnitt 168 übergeht. Der erste Öffnungsabschnitt 166 verläuft im Wesentlichen parallel zur Längsachse des zylindrischen Körpers. Der zweite Öffnungsabschnitt 168 verläuft tangential - versetzt - bezüglich dem Inkreis 112 aber windschief bezüglich der Längsachse des zylindrischen Körpers.

Vorliegend ist die Durchgangsöffnung 148 im Wesentlichen punktsymmetrisch bezüglich dem zentral angeordneten Schwenklager 184 der Zentralachse 150 oder bezüglich dem Stift ausgebildet. Aufgrund dieser Symmetrie sind also der erste Öffnungsabschnitt 166 und auch der zweite Öffnungsabschnitt 168 innerhalb der Durchgangsbohrung 148 zweifach vorgesehen.

In der verschwenkten Stellung der Zentralachse 150 liegt diese am zweiten Öffnungsabschnitt 168 an (Fig. 9). In der unverschwenkten Stellung der Zentralachse 150 liegt diese am ersten Öffnungsabschnitt 166 an (Fig. 11).

Bei der Vorwärtsbewegung des Schälgeräts 100 wird die Zentralachse 150 also um einen vorgegebenen Winkel α verdreht und bei der Rückbewegung wieder gerade gestellt. Der Benutzer hat damit keine volle Umdrehung zu schälen und erhält dennoch einen Vorschub entlang der Längsachse des zu bearbeitenden zylindrischen Körpers.

Der Winkel a, um den die Zentralachse 150 verschwenkbar ist, ist abhängig von der Dimension des zu bearbeitenden zylindrischen Körpers sowie von der Breite der Klinge 122. Für den Winkel α gilt folgendes: α = arctan(Breite der Klinge 122 / Umfang des zylindrischen Körpers) oder tan(α) = Breite der Klinge 122 / Umfang des zylindrischen Körpers.

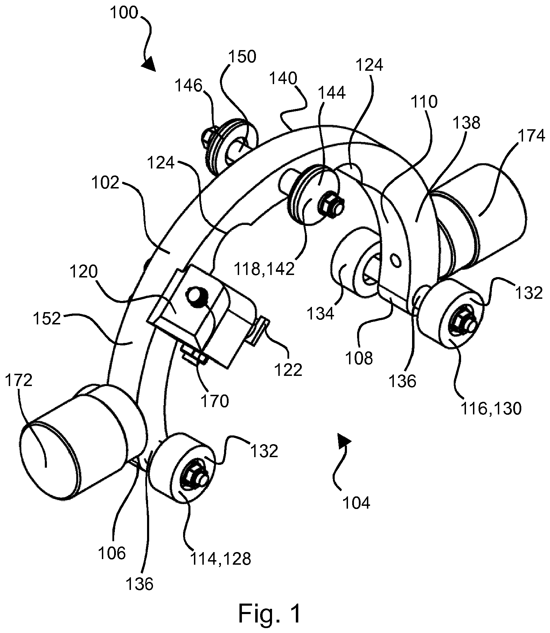

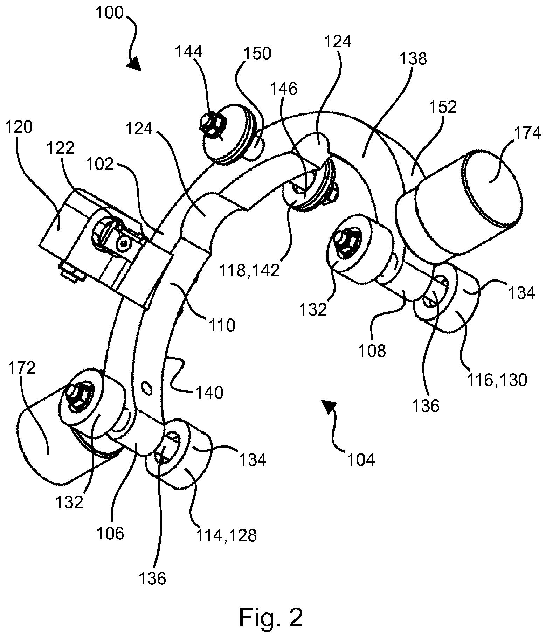

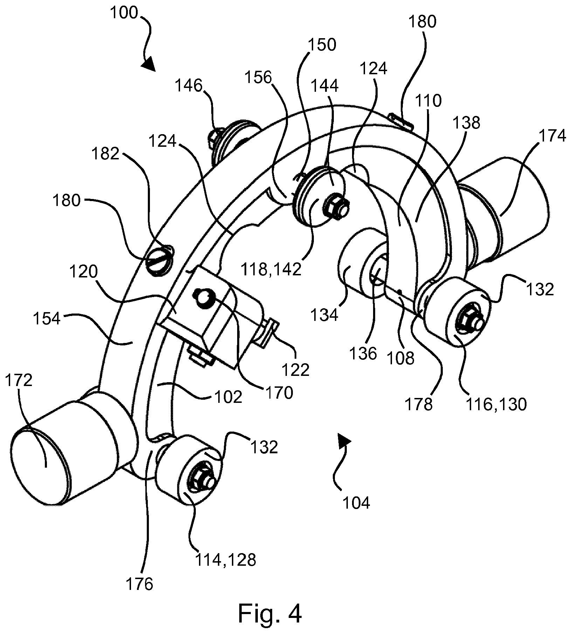

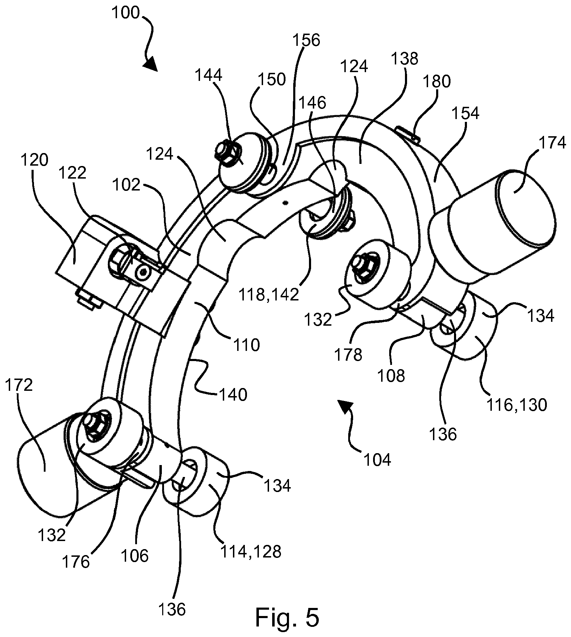

Das Schälgerät 100 nach den Figuren 4 bis 11 unterscheidet sich von demjenigen der Figuren 1 bis 3 lediglich durch einen relativ bezüglich dem Grundkörper 102, begrenzt verschiebbar geführten Ring 154. Während beim Schälgerät 100 nach den Figuren 1 bis 3 der erste Griff 172 und der zweite Griff 174 am Grundkörper 102 unmittelbar festgelegt sind, sind die Griffe 172, 174 beim Schälgerät 100 nach den Figuren 4 bis 11 am Ring 154 fixiert.

Der Ring 154 weist mindestens ein, vorliegend genau zwei Langlöcher 182 auf, durch die ein Schaft einer Schraube 180 geführt ist, der im Grundkörper 102 befestigt ist. Eine andere Anzahl an Langlöchern 182 mit darin angeordneter Schraube 180 ist möglich. Der Kopf der Schraube 180 überragt das Langloch 182 seitlich, wobei der Ring 154 - mit Spiel - am Grundkörper 102 gelagert ist. Mittels der Langlöcher 182 und der darin jeweils angeordneten Schraube 180 lässt sich der Bereich vorgeben, in welchem der Ring 154 bezüglich des Grundkörpers 102 begrenzt verschiebbar ist. Die Führung des Ringes 154 wird begünstigt durch seinen L-förmigen Querschnitt, wobei sich ein erster Schenkel zumindest teilweise entlang einer der Seitenflächen 138, 140 erstreckt, und wobei sich ein zweiter Schenkel zumindest teilweise entlang der Außenfläche 152 erstreckt.

Der Ring 154 umfasst außerdem einen Abschnitt 156, durch den die Zentralachse 150 geführt ist. Dieser - an einer der Seitenflächen 138, 140 angeordnete - Abschnitt 156 weist einen ersten Anschlag 158 und einen zweiten Anschlag 160 auf, die ausgebildet sind, die Zentralachse 150 zwischen der verschwenkten Stellung und der unverschwenkten Stellung zu verstellen. Wird also der Ring 154 in der dem Abtragen entsprechenden Drehrichtung 162 verschwenkt, so gleitet der Abschnitt 156 relativ bezüglich dem Grundkörper 102 bis der erste Anschlag 158 in Anlage mit der Zentralachse 150 kommt und die Zentralachse 150 in die verschwenkte Stellung überführt wird (Fig. 9). Wird der Ring 154 in der entgegengesetzten Drehrichtung 164 verschoben, so gleitet der Abschnitt 156 entlang dem Grundkörper 102 bis der zweite Anschlag 160 mit der Zentralachse 150 in Anlage kommt und die Zentralachse 150 wieder in die unverschwenkte Stellung zurückgeführt ist (Fig. 11).

Der Ring 154 umfasst außerdem an seinem einen Ende einen ersten Lagerabschnitt 176. Alternativ oder ergänzend umfasst der Ring an seinem anderen Ende einen zweiten Lagerabschnitt 178. Die Außenachsen 136 sind durch Ausnehmungen der Lagerabschnitte 176, 178 geführt. Diese Ausnehmungen können - analog zum Abschnitt 156 der Zentralachse 150 - ebenfalls Anschläge 158, 160 aufweisen, durch die eine Verschwenkung der Außenachsen 136 erfolgt, wenn der Ring 154 bezüglich dem Grundkörper 102 verstellt wird.

Abschließend sei darauf hingewiesen, dass die Rollen 132, 134, 144, 146 unter einem Abstand zum Grundkörper 102 angeordnet sein können, insbesondere um eine ausreichende Verschwenkbarkeit der Achsen 150, 136 zu gewährleisten. Diese Beabstandung dient der betriebssicheren Verstellung von der Zentralachse 150 und/oder von einer oder von beiden der Außenachsen 136 zwischen ihrer verschwenkten Stellung und ihrer unverschwenkten Stellung.

### Bezugszeichenliste

- 100: Schälgerät
- 102: Grundkörper
- 104: Öffnung
- 106: (erstes) freies Ende
- 108: (zweites) freies Ende
- 110: Innenfläche
- 112: Inkreis
- 114: (erstes) Außenauflager
- 116: (zweites) Außenauflager
- 118: Zentralauflager
- 120: Klingenhalterung
- 122: Klinge
- 124: Aussparung
- 128: (erstes) Außenrollenpaar
- 130: (zweites) Außenrollenpaar
- 132: (erste) Außenrolle
- 134: (zweite) Außenrolle
- 136: Außenachse
- 138: (erste) Seitenfläche
- 140: (zweite) Seitenfläche
- 142: Zentralrollenpaar
- 144: (erste) Zentralrolle
- 146: (zweite) Zentralrolle
- 148: Durchgangsöffnung
- 150: Zentralachse
- 152: Außenfläche
- 154: Ring
- 156: Abschnitt
- 158: (erster) Anschlag
- 160: (zweiter) Anschlag
- 162: Drehrichtung (Vorschub/Abtragen)
- 164: Drehrichtung (Rücklauf)
- 166: (erster) Öffnungsabschnitt
- 168: (zweiter) Öffnungsabschnitt
- 170: Feder
- 172: (erster) Griff
- 174: (zweiter) Griff
- 176: (erster) Lagerabschnitt
- 178: (zweiter) Lagerabschnitt
- 180: Schraube
- 182: Langloch
- 184: Schwenklager

## Patentansprüche

1. Schälgerät (100) zum zumindest teilweisen Abtragen einer Außenumfangsoberfläche eines zumindest annähernd zylindrischen Körpers, insbesondere eines zylindrischen Kunststoffrohrs,
mit einem C-förmigen oder einem C-ähnlich geformten Grundkörper (102), der zur Ausbildung einer peripheren Öffnung (104) am Grundkörper (102) zwei freie Enden (106, 108) sowie eine in die freien Enden (106, 108) übergehende Innenfläche (110) umfasst, wobei der zylindrische Körper zwischen die freien Enden (106, 108) einführbar und konzentrisch zu einem Mittelpunkt eines durch die Innenfläche (110) des Grundkörpers (102) vorgegebenen Inkreises (112) positionierbar ist, und wobei an den freien Enden (106, 108) jeweils mindestens ein an einer Außenachse (136) gelagertes Außenauflager (114, 116) angeordnet ist, welches an dem zylindrischen Körper anliegt, wenn dieser konzentrisch zum Mittelpunkt des Inkreises (112) positioniert ist, mit mindestens einer an der Innenfläche (110) des Grundkörpers (102) ausgebildeten Aussparung (124),
mit mindestens einem am Grundkörper (102) ausgebildeten oder daran angeordneten, von den freien Enden (106, 108) beabstandeten und an einer Zentralachse (150) gelagerten Zentralauflager (118),
sowie mit einer am Grundkörper (102) ausgebildeten oder daran angeordneten Klingenhalterung (120), in der eine Klinge (122) einspannbar oder eingespannt ist, derart, dass die Klinge (122) den durch die Innenfläche (110) vorgegebenen Inkreis (112) überragt und damit die Außenumfangsoberfläche eines eingeführten zylindrischen Körpers zumindest zeitweise kontaktiert oder abträgt.

2. Schälgerät (100) nach Anspruch 1, wobei die Zentralachse (150) und/oder eine oder beide der Außenachsen (136) um einen vorgegebenen Winkel tangential bezüglich des Inkreises (112) verschwenkbar gelagert sind.

3. Schälgerät (100) nach Anspruch 1 oder 2, wobei die freien Enden (106, 108) am Grundkörper (102) derart ausgebildet sind, dass der Grundkörper (102) den zylindrischen Körper oder den Inkreis (112) über einen Winkel von mehr als 180 Grad umschließt.

4. Schälgerät (100) nach einem der Ansprüche 1 bis 3, wobei die Außenauflager (114, 116) aus wenigstens einer Außenrolle (132, 134) gebildet sind, die auf der Außenachse (136) drehbar gelagert ist.

5. Schälgerät (100) nach einem der Ansprüche 1 bis 4, wobei das Zentralauflager (118) äquidistant von den freien Enden (106, 108) beabstandet am Grundkörper (102) ausgebildet oder daran gelagert ist.

6. Schälgerät (100) nach einem der Ansprüche 1 bis 5, wobei das Zentralauflager (118) als ein Zentralrollenpaar (142) mit Zentralrollen (144, 146) gebildet ist, die auf der in einer Durchgangsöffnung (148) des Grundkörpers (102) gelagerten Zentralachse (150) drehbar gelagert sind.

7. Schälgerät (100) nach Anspruch 6, wobei eine erste Zentralrolle (144) seitlich neben einer ersten Seitenfläche (138) des Grundkörpers (102) drehbar gelagert ist, und dass eine zweite Zentralrolle (146) seitlich neben einer parallel zu der ersten Seitenfläche (138) angeordneten zweiten Seitenfläche (140) drehbar gelagert ist.

8. Schälgerät (100) nach Anspruch 6 oder 7, wobei die Zentralrollen (144, 146) auf ihrer dem Grundkörper (102) abgewandten Seite sich im Durchmesser verjüngend gebildet sind.

9. Schälgerät (100) nach einem der Ansprüche 1 bis 8, wobei die Zentralachse (150) und/oder die eine oder die beiden Außenachsen (136) zwischen einer einem Vorschub des Schälgeräts (100) entsprechenden verschwenkten Stellung und einer einem Rücklauf des Schälgeräts (100) entsprechenden unverschwenkten Stellung verstellbar ist.

10. Schälgerät (100) nach Anspruch 9, wobei an einer Außenfläche (152) und/oder an einer Seitenfläche (138, 140) des Grundkörpers (102) ein relativ bezüglich des Grundkörpers (102) begrenzt verschiebbar geführter Ring (154) angeordnet ist, der einen Abschnitt (156) mit Anschlägen (158, 160) aufweist, und dass die Zentralachse (150) mittels der Anschläge (158, 160) zwischen der verschwenkten Stellung und der unverschwenkten Stellung verstellbar ist.

11. Schälgerät (100) nach Anspruch 10, wobei der Ring (154) wenigstens einen Lagerabschnitt (176, 178) mit Anschlägen (158, 160) aufweist, durch welchen eine der Außenachsen (136) geführt ist, und dass die durch den Lagerabschnitt (176, 178) geführte Außenachse (136) mittels der Anschläge (158, 160) zwischen der verschwenkten Stellung und der unverschwenkten Stellung verstellbar ist.

12. Schälgerät (100) nach einem der Ansprüche 9 bis 11, wobei beim Umdrehen des Grundkörpers (102) in einer dem Abtragen entsprechenden Drehrichtung (162) die Zentralachse (150) und/oder eine oder beide der Außenachsen (136) in die verschwenkte Stellung überführt werden oder überführt sind, und dass beim Umdrehen des Grundkörpers (102) in einer dem Abtragen entgegengesetzten Drehrichtung (164) die Zentralachse (150) und/oder eine oder beide der Außenachsen (136) in die unverschwenkte Stellung überführt werden oder überführt sind.

13. Schälgerät (100) nach einem der Ansprüche 1 bis 12, wobei im Grundkörper (102) Durchgangsöffnungen (148) ausgebildet sind, dass durch jeweils eine der Durchgangsöffnung (148) die Zentralachse (150) oder eine der Außenachsen (136) geführt ist, und dass die Durchgangsöffnung (148) einen ersten Öffnungsabschnitt (166) umfasst, der parallel zu einer Längsachse des zylindrischen Körpers verläuft und der in einen zweiten Öffnungsabschnitt (168) übergeht, der tangential bezüglich dem Inkreis (112) aber windschief bezüglich der Längsachse des zylindrischen Körpers verläuft.

14. Schälgerät (100) nach einem der Ansprüche 1 bis 13, wobei die Außenauflager (114, 116) zumindest teilweise aus einem elastisch nachgiebigen Material gebildet sind.

15. Schälgerät (100) nach einem der Ansprüche 1 bis 14, wobei eine in der Klingenhalterung (120) eingespannte Klinge (122) radial bezüglich des Inkreises (112) mittels einer Feder (170) beaufschlagt ist.

## Claims

1. A peeling apparatus (100) for at least partially removing an outer circumferential surface of an at least approximately cylindrical body, in particular of a cylindrical plastic tube,
with a C-shaped or C-like shaped base body (102), which comprises two free ends (106, 108) as well as an inner surface (110) merging into the free ends (106, 108) for forming a peripheral opening (104) at the base body (102), wherein the cylindrical body is insertable between the free ends (106, 108) and concentrically positionable to a center point of an inner circle (112) predetermined by the inner surface (110) of the base body (102), and wherein at least one outer support (114, 116) is arranged at each of the free ends (106, 108), which outer support (114, 116) is supported on an outer axis (136) and bears against the cylindrical body when the latter is positioned concentric to the center point of the inner circle (112), with at least one recess (124) formed on the inner surface (110) of the base body (102),
with at least one central support (118) formed on the base body (102) or arranged thereon, spaced from the free ends (106, 108) and supported on a central axis (150),
and with a blade holder (120) which is formed on or arranged on the base body (102) and in which a blade (122) can be clamped or is clamped in such a way that the blade (122) projects beyond the inner circle (112) defined by the inner surface (110) and thus at least temporarily contacts or removes the outer circumferential surface of an inserted cylindrical body.

2. The peeling apparatus (100) according to claim 1, wherein the central axis (150) and/or one or both of the outer axes (136) are mounted so as to be tangentially pivotable by a predetermined angle with respect to the inner circle (112).

3. The peeling apparatus (100) according to claim 1 or 2, wherein the free ends (106, 108) are formed at the base body (102) in such a way that the base body (102) clasps around the cylindrical body or the inner circle (112) over an angle of more than 180 degrees.

4. The peeling apparatus (100) according to any one of claims 1 to 3, wherein the outer supports (114, 116) are formed by at least one outer roller (132, 134) which is rotatably mounted on the outer axis (136).

5. The peeling apparatus (100) according to any one of claims 1 to 4, wherein the central support (118) is formed on the base body (102), or is supported thereon, equidistantly from the free ends (106, 108).

6. The peeling apparatus (100) according to any one of claims 1 to 5, wherein the central bearing (118) is formed as a central roller pair (142) with central rollers (144, 146), which are rotatably mounted on the central axis (150) mounted in a through opening (148) of the base body (102).

7. The peeling apparatus (100) according to claim 6, wherein a first central roller (144) is rotatably mounted laterally adjacent to a first side surface (138) of the base body (102), and wherein a second central roller (146) is rotatably mounted laterally adjacent to a second side surface (140) arranged parallel to the first side surface (138).

8. The peeling apparatus (100) according to claim 6 or 7, wherein the central rollers (144, 146) are tapered at their side facing away from the base body (102).

9. The peeling apparatus (100) according to any one of claims 1 to 8, wherein the central axis (150) and/or the one or the two outer axes (136) is adjustable between a pivoted position corresponding to an infeed of the peeling device (100) and a non-pivoted position corresponding to a return of the peeling device (100).

10. The peeling apparatus (100) according to claim 9, wherein a ring (154) guided for limited displacement relative to the base body (102) is arranged on an outer surface (152) and/or on a side surface (138, 140) of the base body (102), wherein the ring (154) has a section (156) with stops (158, 160), and wherein the central axis (150) can be adjusted between the pivoted position and the non-pivoted position by means of the stops (158, 160).

11. The peeling apparatus (100) according to claim 10, wherein the ring (154) comprises at least one bearing section (176, 178) with stops (158, 160), wherein one of the outer axes (136) is guided through the bearing section (176, 178), and wherein the outer axis (136) guided through the bearing section (176, 178) is adjustable between the pivoted position and the non-pivoted position by means of the stops (158, 160).

12. The peeling apparatus (100) according to any one of claims 9 to 11, wherein, when the basic body (102) is rotated in a direction of rotation (162) corresponding to the removal, the central axis (150) and/or one or both of the outer axes (136) are transferred or have been transferred into the pivoted position, and wherein, when the base body (102) is rotated in a direction of rotation (164) opposite to the removal, the central axis (150) and/or one or both of the outer axes (136) are transferred or have been transferred into the non-pivoted position.

13. The peeling apparatus (100) according to any one of claims 1 to 12, wherein through openings (148) are formed in the base body (102), wherein the central axis (150) or one of the outer axes (136) is guided respectively through one of the through openings (148), and wherein the through opening (148) comprises a first opening portion (166) which is parallel to a longitudinal axis of the cylindrical body and which merges into a second opening section (168) which is tangential with respect to the inner circle (112) but is skew with respect to the longitudinal axis of the cylindrical body.

14. The peeling apparatus (100) according to any one of claims 1 to 13, wherein the outer supports (114, 116) are at least partially formed of an elastically yieldable material.

15. The peeling apparatus (100) according to any one of claims 1 to 14, wherein a blade (122) clamped in the blade holder (120) is biased radially with respect to the inner circle (112) by means of a spring (170).

## Revendications

1. Appareil d'écroûtage (100) destiné à éliminer au moins en partie une surface circonférentielle extérieure d'un corps au moins sensiblement cylindrique, en particulier d'un tube cylindrique en matière plastique,
pourvu d'un corps de base (102) en forme de C ou dont la forme s'apparente à celle d'un C, lequel comprend au niveau du corps de base (102), en vue de former une ouverture périphérique (104), deux extrémités libres (106, 108) ainsi qu'une surface intérieure (110) prolongée par lesdites extrémités libres (106, 108), le corps cylindrique pouvant être inséré entre les extrémités libres (106, 108) et pouvant être positionné de manière concentrique par rapport à un centre d'un cercle inscrit (112) prédéfini par la surface intérieure (110) du corps de base (102), et aux extrémités libres (106, 108) étant disposé respectivement au moins un appui extérieur (114, 116) qui est logé sur un axe extérieur (136) et qui repose contre le corps cylindrique lorsque celui-ci est positionné de manière concentrique par rapport au centre du cercle inscrit (112), pourvu d'au moins un évidement (124) formé sur la surface intérieure (110) du corps de base (102),
pourvu d'au moins un appui central (118) formé ou disposé sur le corps de base (102), espacé des extrémités libres (106, 108) et logé sur un axe central (150),
et pourvu d'un support de lame (120) formé ou disposé sur le corps de base (102), dans lequel une lame (122) peut être maintenue serrée ou est maintenue serrée de telle sorte que la lame (122) dépasse du cercle inscrit (112) prédéfini par la surface intérieure (110) et est ainsi en contact au moins à des moments donnés avec la surface circonférentielle extérieure d'un corps cylindrique inséré ou procède à l'élimination de celle-ci.

2. Appareil d'écroûtage (100) selon la revendication 1, dans lequel l'axe central (150) et/ou l'un ou les deux axes extérieurs (136) est/sont logé(s) de manière à pouvoir pivoter tangentiellement par rapport au cercle inscrit (112) selon un angle prédéfini.

3. Appareil d'écroûtage (100) selon la revendication 1 ou 2, dans lequel les extrémités libres (106, 108) du corps de base (102) sont formées de telle sorte que le corps de base (102) entoure le corps cylindrique ou le cercle inscrit (112) sur un angle supérieur à 180 degrés.

4. Appareil d'écroûtage (100) selon l'une quelconque des revendications 1 à 3, dans lequel les appuis extérieurs (114, 116) sont formés d'au moins un rouleau extérieur (132, 134) qui est logé de manière rotative sur l'axe extérieur (136).

5. Appareil d'écroûtage (100) selon l'une quelconque des revendications 1 à 4, dans lequel l'appui central (118) est formé ou logé sur le corps de base (102) à équidistance des extrémités libres (106, 108).

6. Appareil d'écroûtage (100) selon l'une quelconque des revendications 1 à 5, dans lequel l'appui central (118) est réalisé sous la forme d'une paire de rouleaux centraux (142) constituée de rouleaux centraux (144, 146) qui sont logés de manière rotative sur l'axe central (150) logé dans une ouverture traversante (148) du corps de base (102).

7. Appareil d'écroûtage (100) selon la revendication 6, dans lequel un premier rouleau central (144) est logé de manière rotative latéralement à côté d'une première surface latérale (138) du corps de base (102), et dans lequel un deuxième rouleau central (146) est logé de manière rotative latéralement à côté d'une deuxième surface latérale (140) disposée de manière parallèle à la première surface latérale (138).

8. Appareil d'écroûtage (100) selon la revendication 6 ou 7, dans lequel les rouleaux centraux (144, 146) sont formés de manière à présenter, sur leur côté opposé au corps de base (102), un diamètre qui va en diminuant.

9. Appareil d'écroûtage (100) selon l'une quelconque des revendications 1 à 8, dans lequel l'axe central (150) et/ou l'un ou les deux axes extérieurs (136) peut/peuvent être déplacé(s) entre une position pivotée qui correspond à un mouvement d'avance de l'appareil d'écroûtage (100) et une position non-pivotée qui correspond à un mouvement de marche arrière de l'appareil d'écroûtage (100).

10. Appareil d'écroûtage (100) selon la revendication 9, dans lequel sur une face extérieure (152) et/ou sur une face latérale (138, 140) du corps de base (102) est disposé un anneau (154) guidé à déplacement limité qui présente une partie (156) pourvue de butées (158, 160), et dans lequel l'axe central (150) peut être déplacé entre la position pivotée et la position non-pivotée au moyen des butées (158, 160).

11. Appareil d'écroûtage (100) selon la revendication 10, dans lequel l'anneau (154) présente au moins une partie palier (176, 178) pourvue de butées (158, 160) grâce à laquelle est guidé l'un des axes extérieurs (136), et dans lequel ledit axe extérieur (136) guidé par la partie palier (176, 178) peut être déplacé entre la position pivotée et la position non-pivotée au moyen des butées (158, 160).

12. Appareil d'écroûtage (100) selon l'une quelconque des revendications 9 à 11, dans lequel lorsque le corps de base (102) tourne dans un sens de rotation (162) correspondant à l'enlèvement de matière, l'axe central (150) et/ou l'un ou les deux axes extérieurs (136) passe(nt) ou se trouve(nt) dans la position pivotée, et dans lequel lorsque le corps de base (102) tourne dans un sens de rotation (164) qui est contraire à l'enlèvement de matière, l'axe central (150) et/ou l'un ou les deux axes extérieurs (136) passe(nt) ou se trouve(nt) dans la position non-pivotée.

13. Appareil d'écroûtage (100) selon l'une quelconque des revendications 1 à 12, dans lequel des ouvertures traversantes (148) sont formées dans le corps de base (102), dans lequel l'axe central (150) ou l'un des axes extérieurs (136) est guidé à travers respectivement l'une des ouvertures traversantes (148) et dans lequel l'ouverture traversante (148) comprend une première partie d'ouverture (166) qui s'étend parallèlement à un axe longitudinal du corps cylindrique et débouche dans une deuxième partie d'ouverture (168) qui s'étend tangentiellement par rapport au cercle inscrit (112) mais de manière inclinée par rapport à l'axe longitudinal du corps cylindrique.

14. Appareil d'écroûtage (100) selon l'une quelconque des revendications 1 à 13, dans lequel les appuis extérieurs (114, 116) sont formés au moins en partie en un matériau élastiquement souple.

15. Appareil d'écroûtage (100) selon l'une quelconque des revendications 1 à 14, dans lequel une lame (122) maintenue serrée dans le support de lame (120) est pressée de manière radiale par rapport au cercle inscrit (112) au moyen d'un ressort (170).
